# EUROPEAN PATENT APPLICATION

(11) **EP 4 727 101 A1**
(43) Date of publication of application: **15.04.2026**
(21) Application number: 24843386.4
(22) Date of filing: 08.07.2024
(51) Int. Cl.: H04M 1/04, H04M 1/02, F16M 11/04, F16M 11/10

(54) **GRIP DEVICE OF PORTABLE ELECTRONIC DEVICE**

(30) Priority: 17.07.2023 KR 20230092229; 03.11.2023 KR 20230151159; 04.12.2023 KR 20230172933; 29.01.2024 KR 20240013226; 02.02.2024 KR 20240016859; 21.03.2024 KR 20240038806; 08.06.2024 KR 20240074637; 25.06.2024 KR 20240082437
(71) Applicant: Cho, Wonsang, Asan-si Chungcheongnam-do 31566 (KR)
(72) Inventor: Cho, Wonsang, Asan-si Chungcheongnam-do 31566 (KR)
(74) Representative: Kim Kang, Jae Hee
(86) International application number: PCT/KR2024/009629
(87) International publication number: WO 2025/018667

(57) **Abstract**

A grip device for a portable electronic device according to an embodiment of the present invention includes: a base attached to the portable electronic device; a first member coupled to the base; a second member having a locking protrusion, coupled to the base, and operating in conjunction with the first member; a plate having one or more locking parts that can be coupled to the locking protrusion, and coupled to the base so as to be slidable back and forth a predetermined distance; and a grip having one or more finger holes and coupled to the plate so as to be rotatable a predetermined angle about a predetermined axis.

## Description

### TECHNICAL FIELD

The present invention relates to a grip device for a portable electronic device, and more particularly, to a device for helping a user to hold the portable electronic device more stably and comfortably.

### BACKGROUND ART

A device may be required to help hold a portable electronic device more stably and comfortably.

"Korean Registered Patent No. 10-1986714 (Published on June 21, 2019)" discloses an "accessory for a portable device" which is mounted on a portable device and has a loop portion that can slide, but the accessory disclosed in the document has problems with inconvenient operation and use.

### DETAILED DESCRIPTION OF THE INVENTION

### TECHNICAL PROBLEM

The present invention aims to provide a grip device for a portable electronic device that helps a user to hold the portable electronic device more stably and comfortably, and is convenient to operate and use.

The technical problems of the present invention are not limited to the technical problems mentioned above, and other unmentioned technical problems will be clearly understood by those skilled in the art from the following descripti¹on.

### TECHNICAL SOLUTION

A grip device for a portable electronic device according to a first aspect of the present invention may include: a base (20) attached to the portable electronic device; a first member (30A, 30B, 80A, 80B) coupled to the base (20); a second member (70A, 70B, 90A, 90B) having a locking protrusion (71), coupled to the base (20), and operating in conjunction with the first member (30A, 30B, 80A, 80B); a plate (50) having one or more locking parts (51A, 51B, 51C) that can be coupled to the locking protrusion (71), and coupled to the base (20) so as to be slidable back and forth a predetermined distance; and a grip (10) having one or more finger holes (11A, 11B, 11C) and coupled to the plate (50) so as to be rotatable a predetermined angle about a predetermined axis.

In the grip device for a portable electronic device according to the first aspect of the present invention, the first member (30A) may be coupled to the base (20) so as to be slidable back and forth a predetermined distance; the second member (70A) may be coupled to the base (20) so as to be pivotable a predetermined angle; and the second member (70A) may pivot a predetermined angle toward the opposite side of the plate (50) as the first member (30A) slides backward a predetermined distance.

As the first member (30A) slides backward a predetermined distance, a pusher (33) formed on the first member (30A) may push a pusher coupling part (72A) formed on the second member (70A) toward the opposite side of the plate (50), causing the second member (70A) to pivot a predetermined angle toward the opposite side of the plate (50).

In the grip device for a portable electronic device according to the first aspect of the present invention, the first member (80A) may be coupled to the base (20) so as to be pivotable a predetermined angle; the second member (70B) may be coupled to the base (20) so as to be pivotable a predetermined angle; and the second member (70B) may pivot a predetermined angle toward the opposite side of the plate (50) as the first member (80A) pivots a predetermined angle in a predetermined direction.

As the first member (80A) pivots a predetermined angle in a predetermined direction, a lower rod (82) of the first member (80A) may push a lower rod coupling part (72B) of the second member (70B) toward the opposite side of the plate (50), causing the second member (70B) to pivot a predetermined angle toward the opposite side of the plate (50).

In the grip device for a portable electronic device according to the first aspect of the present invention, the first member (80B) may be coupled to the base (20) so as to be pivotable a predetermined angle; the second member (90A) may be coupled to the base (20) so as to be slidable left and right a predetermined distance; and the second member (90A) may slide a predetermined distance toward the opposite side of the plate (50) as the first member (80B) pivots a predetermined angle in a predetermined direction.

As the first member (80B) pivots a predetermined angle in a predetermined direction, the lower rod (82) formed on the first member (80B) may push a lower rod coupling part (93) formed on the second member (90A) toward the opposite side of the plate (50), causing the second member (90A) to slide a predetermined distance toward the opposite side of the plate (50).

In the grip device for a portable electronic device according to the first aspect of the present invention, the first member (30B) may be coupled to the base (20) so as to be slidable back and forth a predetermined distance; the second member (90B) may be coupled to the base (20) so as to be slidable left and right a predetermined distance; and the second member (90B) may slide a predetermined distance toward the opposite side of the plate (50) as the first member (30B) slides backward a predetermined distance.

As the first member (30B) slides backward a predetermined distance, a lower rod (36) formed on the first member (30B) may slide in contact with a lower rod contact surface (96) formed on the second member (90B), causing the second member (90B) to slide a predetermined distance toward the opposite side of the plate (50).

In the grip device for a portable electronic device according to the first aspect of the present invention, it may further include a first spring (61), and the plate (50) may be pulled or moved forward by the first spring (61).

In the grip device for a portable electronic device according to the first aspect of the present invention, it may further include a second spring (62), and the first member (30A, 30B) may be pulled or moved forward by the second spring (62).

In the grip device for a portable electronic device according to the first aspect of the present invention, it may further include a third spring (63), and the second member (90A, 90B) may be moved toward the plate (50) by the third spring (63).

In the grip device for a portable electronic device according to the first aspect of the present invention, a first guide rail (21A) may be formed on the top surface (24) of the base (20); a guide groove (52A) may be formed on the bottom surface of the plate (50); and the plate (50) may slide back and forth along the first guide rail (21A) as the first guide rail (21A) and the guide groove (52A) are coupled.

In the grip device for a portable electronic device according to the first aspect of the present invention, a first guide groove (21B) may be formed on the top surface (24) of the base (20); a guide rail (52B) may be formed on the bottom surface of the plate (50); and the plate (50) may slide back and forth along the first guide groove (21B) as the first guide groove (21B) and the guide rail (52B) are coupled.

In the grip device for a portable electronic device according to the first aspect of the present invention, a guide rod (28) may be formed or installed on the base (20); the plate (50) may have a guide rod insertion hole (58); the grip (10) may have a guide rod insertion hole (18); and the plate (50) and the grip (10) may together slide back and forth along the guide rod (28), and the grip (10) may also be rotatable a predetermined angle about the guide rod (28), while the guide rod (28) is located within the guide rod insertion hole (58) of the plate (50) and the guide rod insertion hole (18) of the grip (10).

In the grip device for a portable electronic device according to the first aspect of the present invention, the plate (50) may have a shaft receiving groove (53) whose bottom is open; the grip (10) may be rotatable a predetermined angle about the shaft (15) of the grip (10) while the shaft (15) is accommodated in the shaft receiving groove (53); and the shaft (15) may slide back and forth while being in contact with the top surface (24) of the base (20) while being accommodated in the shaft receiving groove (53).

In the grip device for a portable electronic device according to the first aspect of the present invention, when the plate (50) and the grip (10) are moved forward, the grip (10) may be tilted to one of the left and right sides about the predetermined axis, but cannot be tilted to the opposite side; and when the plate (50) and the grip (10) are moved backward, the grip (10) cannot be tilted to the left or right about the predetermined axis, and a state of being upright at a predetermined angle may be maintained.

When the plate (50) and the grip (10) are moved backward, the grip (10) may be positioned between a side (56) of the plate (50) and a side wall (22) of the base (20), and the grip (10) may be supported by the side (56) of the plate (50) and the side wall (22) of the base (20), thereby preventing the grip (10) from being tilted to the left or right about the predetermined axis, and maintaining the state of being upright at a predetermined angle.

In the grip device for a portable electronic device according to the first aspect of the present invention, when the plate (50) and the grip (10) are moved forward, the grip (10) may be tilted to one of the left and right sides about the predetermined axis, but cannot be tilted to the opposite side; and when the plate (50) and the grip (10) are moved backward, the grip (10) cannot be tilted to the left or right about the predetermined axis, and a state of being upright at a predetermined angle may be maintained.

It may further include a cover (40) coupled to the base (20); and when the plate (50) and the grip (10) are moved forward, the grip (10) may be tilted to one of the left and right sides about the predetermined axis, but cannot be tilted to the opposite side because a side of the grip (10) comes into contact with a side (41) of the cover (40).

When the plate (50) and the grip (10) are moved backward, the grip (10) may be positioned between the side (41) of the cover (40) and the side wall (22) of the base (20), and the grip (10) may be supported by the side (41) of the cover (40) and the side wall (22) of the base (20), thereby preventing the grip (10) from being tilted to the left or right about the predetermined axis, and maintaining the state of being upright at a predetermined angle.

In the grip device for a portable electronic device according to the first aspect of the present invention, it may further include a cover (40) coupled to the base (20); slide grooves (42) may be respectively formed on the inner sides of both sides of the cover (40), and the base (20) and the cover (40) may be coupled as both side parts (25A) of the base (20) are respectively inserted into the slide grooves (42); coupling grooves (25B) may be respectively formed on the lower parts of both sides of the base (20), and coupling protrusions (43) may be respectively formed on both sides of the cover (40); and the coupling grooves (25B) and the coupling protrusions (43) may be respectively coupled when the side parts (25A) are respectively inserted into the slide grooves (42).

In the grip device for a portable electronic device according to the first aspect of the present invention, the grip (10) may have a plurality of finger holes (11A, 11B, 11C), a finger rest (12) may be formed behind the finger holes (11A, 11B, 11C), the top (Z) of the finger rest (12) may be open, and a user's finger may be placed on the finger rest (12).

A support rod (13) may be formed at the rear part of the finger rest (12), and the user's finger placed on the finger rest (12) may escape toward the top (Z) of the finger rest (12).

A grip device for a portable electronic device according to a second aspect of the present invention includes: a base (20) attached to the portable electronic device; a plate (50) coupled to the base (20) so as to be slidable back and forth a predetermined distance; and a grip (10) having one or more finger holes (11A, 11B, 11C) and coupled to the plate (50) so as to be rotatable a predetermined angle about a predetermined axis, wherein a first guide rail (21A) is formed on the top surface (24) of the base (20); a guide groove (52A) is formed on the bottom surface of the plate (50); and the plate (50) may slide back and forth along the first guide rail (21A) as the first guide rail (21A) and the guide groove (52A) are coupled.

A grip device for a portable electronic device according to a third aspect of the present invention includes: a base (20) attached to the portable electronic device; a plate (50) coupled to the base (20) so as to be slidable back and forth a predetermined distance; and a grip (10) having one or more finger holes (11A, 11B, 11C) and coupled to the plate (50) so as to be rotatable a predetermined angle about a predetermined axis, wherein a first guide groove (21B) is formed on the top surface (24) of the base (20); a guide rail (52B) is formed on the bottom surface of the plate (50); and the plate (50) may slide back and forth along the first guide groove (21B) as the first guide groove (21B) and the guide rail (52B) are coupled.

A grip device for a portable electronic device according to a fourth aspect of the present invention includes: a base (20) attached to the portable electronic device; a plate (50) coupled to the base (20) so as to be slidable back and forth a predetermined distance; and a grip (10) having one or more finger holes (11A, 11B, 11C) and coupled to the plate (50) so as to be rotatable a predetermined angle about a predetermined axis, wherein a guide rod (28) is formed or installed on the base (20); the plate (50) has a guide rod insertion hole (58); the grip (10) has a guide rod insertion hole (18); and the plate (50) and the grip (10) may together slide back and forth along the guide rod (28), and the grip (10) may also be rotatable a predetermined angle about the guide rod (28), while the guide rod (28) is located within the guide rod insertion hole (58) of the plate (50) and the guide rod insertion hole (18) of the grip (10).

A grip device for a portable electronic device according to a fifth aspect of the present invention includes: a base (20) attached to the portable electronic device; a plate (50) coupled to the base (20) so as to be slidable back and forth a predetermined distance; and a grip (10) having one or more finger holes (11A, 11B, 11C) and coupled to the plate (50), wherein the plate (50) has a shaft receiving groove (53) whose bottom is open; the grip (10) may be rotatable a predetermined angle about the shaft (15) of the grip (10) while the shaft (15) is accommodated in the shaft receiving groove (53); and the shaft (15) may slide back and forth while being in contact with the top surface (24) of the base (20) while being accommodated in the shaft receiving groove (53).

A grip device for a portable electronic device according to a sixth aspect of the present invention includes: a base (20) attached to the portable electronic device; a plate (50) coupled to the base (20) so as to be slidable back and forth a predetermined distance; and a grip (10) having one or more finger holes (11A, 11B, 11C) and coupled to the plate (50) so as to be rotatable a predetermined angle about a predetermined axis, wherein when the plate (50) and the grip (10) are moved forward, the grip (10) may be tilted to one of the left and right sides about the predetermined axis, but cannot be tilted to the opposite side; and when the plate (50) and the grip (10) are moved backward, the grip (10) cannot be tilted to the left or right about the predetermined axis, and a state of being upright at a predetermined angle may be maintained.

In the grip device for a portable electronic device according to the sixth aspect of the present invention, when the plate (50) and the grip (10) are moved backward, the grip (10) may be positioned between a side (56) of the plate (50) and a side wall (22) of the base (20), and the grip (10) may be supported by the side (56) of the plate (50) and the side wall (22) of the base (20), thereby preventing the grip (10) from being tilted to the left or right about the predetermined axis, and maintaining the state of being upright at a predetermined angle.

In the grip device for a portable electronic device according to the sixth aspect of the present invention, it may further include a cover (40) coupled to the base (20); and when the plate (50) and the grip (10) are moved forward, the grip (10) may be tilted to one of the left and right sides about the predetermined axis, but cannot be tilted to the opposite side because a side of the grip (10) comes into contact with a side (41) of the cover (40).

When the plate (50) and the grip (10) are moved backward, the grip (10) may be positioned between the side (41) of the cover (40) and the side wall (22) of the base (20), and the grip (10) may be supported by the side (41) of the cover (40) and the side wall (22) of the base (20), thereby preventing the grip (10) from being tilted to the left or right about the predetermined axis, and maintaining the state of being upright at a predetermined angle.

A grip device for a portable electronic device according to a seventh aspect of the present invention includes: a base (20) attached to the portable electronic device; a plate (50) coupled to the base (20) so as to be slidable back and forth a predetermined distance; a grip (10) having one or more finger holes (11A, 11B, 11C) and coupled to the plate (50) so as to be rotatable a predetermined angle about a predetermined axis; and a cover (40) coupled to the base (20), wherein slide grooves (42) are respectively formed on the inner sides of both sides of the cover (40), and the base (20) and the cover (40) may be coupled as both side parts (25A) of the base (20) are respectively inserted into the slide grooves (42); coupling grooves (25B) are respectively formed on the lower parts of both sides of the base (20), and coupling protrusions (43) are respectively formed on both sides of the cover (40); and the coupling grooves (25B) and the coupling protrusions (43) may be respectively coupled when the side parts (25A) are respectively inserted into the slide grooves (42).

A grip device for a portable electronic device according to an eighth aspect of the present invention includes: a base (20) attached to the portable electronic device; a plate (50) coupled to the base (20) so as to be slidable back and forth a predetermined distance; and a grip (10) having a plurality of finger holes (11A, 11B, 11C) and coupled to the plate (50) so as to be rotatable a predetermined angle about a predetermined axis, wherein a finger rest (12) is formed behind the finger holes (11A, 11B, 11C), the top (Z) of the finger rest (12) is open, and a user's finger may be placed on the finger rest (12).

In the grip device for a portable electronic device according to the eighth aspect of the present invention, a support rod (13) is formed at the rear part of the finger rest (12), and the user's finger placed on the finger rest (12) may escape toward the top (Z) of the finger rest (12).

A grip device for a portable electronic device according to a ninth aspect of the present invention includes: a base (20) attached to the portable electronic device; and a grip (10) having a plurality of finger holes (11A, 11B, 11C) and coupled directly or indirectly to the base (20) so as to be rotatable a predetermined angle about a predetermined axis, wherein a finger rest (12) is formed behind the finger holes (11A, 11B, 11C), the top (Z) of the finger rest (12) is open, and a user's finger may be placed on the finger rest (12).

In the grip device for a portable electronic device according to the ninth aspect of the present invention, a support rod (13) is formed at the rear part of the finger rest (12), and the user's finger placed on the finger rest (12) may escape toward the top (Z) of the finger rest (12).

### ADVANTAGEOUS EFFECTS

The grip device for a portable electronic device according to the present invention helps a user to hold the portable electronic device more stably and comfortably, and is convenient to operate and use.

The effects of the present invention are not limited to those mentioned above, and other unmentioned effects will be clearly understood by those skilled in the art from the following description.

### DESCRIPTION OF DRAWINGS

FIG. 1(A) shows the state where the grip device for a portable electronic device according to the first embodiment of the present invention is attached to a portable electronic device.
FIG. 1(B) shows the state where the grip is moved backward in the grip device for a portable electronic device of FIG. 1(A).
FIG. 1(C) shows a view of the grip device for a portable electronic device according to the first embodiment of the present invention.
FIG. 1(D) is an operational state diagram of the grip device for a portable electronic device of FIG. 1(C), showing the state where the grip is moved backward.
FIG. 2(A) shows the portable electronic device of FIG. 1(A) and the grip device for a portable electronic device attached thereto, viewed from a different angle.
FIGS. 2(B), (C), and (D) are diagrams showing the operational state of the grip device for a portable electronic device (2A) in FIG. 2(A).
FIGS. 3(A), (B), (C), and (D) show the state where the cover is removed in FIGS. 2(A), (B), (C), and (D).
FIGS. 4(A), (B), (C), and (D) show the state where the portable electronic device is removed in FIGS. 3(A), (B), (C), and (D).
FIG. 5(A) separately shows the shape of the grip, and FIG. 5(B) shows the grip of FIG. 5(A) viewed from a different angle.
FIG. 6(A) separately shows the shape of the cover.
FIG. 6(B) separately shows the shape of the base.
FIG. 6(C) separately shows the shape of the first member, and FIG. 6(D) shows the first member of FIG. 6(C) viewed from a different angle in an inverted state.
FIG. 6(E) separately shows the shape of the second member, and FIG. 6(F) shows the second member of FIG. 6(E) viewed from a different angle in an inverted state.
FIG. 6(G) separately shows the shape of the plate, and FIG. 6(H) shows the plate of FIG. 6(G) viewed from a different angle in an inverted state.
FIG. 7(A) is a perspective view of another shape of base that can be applied instead of the base of FIG. 6(A).
FIG. 7(B) is a perspective view of another shape of plate that can be applied instead of the plate of FIG. 6(G).
FIG. 7(C) shows the plate of FIG. 7(B) in an inverted state.
FIG. 8(A) shows the coupled state of the base and the cover.
FIG. 8(B) shows the base and the cover of FIG. 8(A) in an inverted state.
FIG. 8(C) separately shows the shape of the base in the inverted state as in FIG. 8(B).
FIG. 8(D) separately shows the shape of the cover in the inverted state as in FIG. 8(B).
FIG. 9(A) shows a view of the grip device for a portable electronic device according to the second embodiment of the present invention.
FIGS. 9(B) and 9(C) are diagrams showing the operational state of the grip device for a portable electronic device of FIG. 9(A).
FIG. 10(A) shows the shape of the grip included in the grip device for a portable electronic device according to the second embodiment of the present invention.
FIG. 10(B) shows the shape of the base included in the grip device for a portable electronic device according to the second embodiment of the present invention.
FIG. 10(C) shows the shape of the plate included in the grip device for a portable electronic device according to the second embodiment of the present invention.
FIG. 11(A) shows a view of the grip device for a portable electronic device according to the third embodiment of the present invention.
FIGS. 11(B), (C), and (D) are diagrams showing the operational state of the grip device for a portable electronic device of FIG. 11(A).
FIG. 12(A) shows the shape of the base included in the grip device for a portable electronic device according to the third embodiment of the present invention.
FIG. 12(B) shows the shape of the first member included in the grip device for a portable electronic device according to the third embodiment of the present invention.
FIG. 12(C) shows the shape of the second member included in the grip device for a portable electronic device according to the third embodiment of the present invention, and FIG. 12(D) shows the second member of FIG. 12(C) in an inverted state.
FIG. 13(A) shows a view of the grip device for a portable electronic device according to the fourth embodiment of the present invention.
FIGS. 13(B), (C), and (D) are diagrams showing the operational state of the grip device for a portable electronic device of FIG. 13(A).
FIG. 14(A) shows the shape of the base included in the grip device for a portable electronic device according to the fourth embodiment of the present invention.
FIG. 14(B) shows the shape of the first member included in the grip device for a portable electronic device according to the fourth embodiment of the present invention.
FIG. 14(C) shows the shape of the second member included in the grip device for a portable electronic device according to the fourth embodiment of the present invention.
FIG. 14(D) shows the second member of FIG. 14(C) viewed from a different angle in an inverted state.
FIG. 15(A) shows a view of the grip device for a portable electronic device according to the fifth embodiment of the present invention.
FIGS. 15(B), (C), and (D) are diagrams showing the operational state of the grip device for a portable electronic device of FIG. 15(A).
FIG. 16(A) shows the shape of the base included in the grip device for a portable electronic device according to the fifth embodiment of the present invention.
FIG. 16(B) shows the shape of the first member included in the grip device for a portable electronic device according to the fifth embodiment of the present invention.
FIG. 16(C) shows the first member of FIG. 16(B) viewed from a different angle in an inverted state.
FIG. 16(D) shows the shape of the second member included in the grip device for a portable electronic device according to the fifth embodiment of the present invention.
FIG. 16(E) shows the second member of FIG. 16(D) viewed from a different angle in an inverted state.

### MODE FOR INVENTION

Hereinafter, embodiments of the present invention will be described in detail with reference to the accompanying drawings.

It should be noted that the accompanying drawings are only for facilitating the understanding of the spirit of the present invention, and the spirit of the present invention should not be construed as being limited by the accompanying drawings.

The terms used in this application are only used for describing specific embodiments and are not intended to limit the present invention. The expression of the singular includes the expression of the plural unless the context clearly indicates otherwise.

In this application, terms such as "comprise" or "have" are intended to specify that there are features, numbers, steps, operations, elements, components, or combinations thereof described in the specification, and do not preclude the existence or addition of one or more other features, numbers, steps, operations, elements, components, or combinations thereof.

Terms such as first, second, etc. may be used to describe various elements, but the elements should not be limited by these terms. These terms are only used for the purpose of distinguishing one element from another.

A detailed description of a specific embodiment shown in the accompanying drawings should be read in conjunction with the accompanying drawings, and the drawings are considered part of the overall description of the invention. References to direction or orientation are for convenience of explanation only and are not intended to limit the scope of the present invention in any way.

Specifically, terms indicating position such as "front, rear, left, right, top, bottom, upper, lower, top surface, bottom surface" and their derivatives (e.g., "to the front, to the rear, to the left, to the right," etc.) should be understood by referring to both the described drawings and the related description. In particular, these relative terms are for convenience of explanation only, and do not require that the device of the present invention be configured or operate in a specific direction.

In describing with reference to the accompanying drawings, the same or similar elements are assigned the same reference numerals, and redundant explanations thereof may be omitted.

### << FIRST EMBODIMENT >>

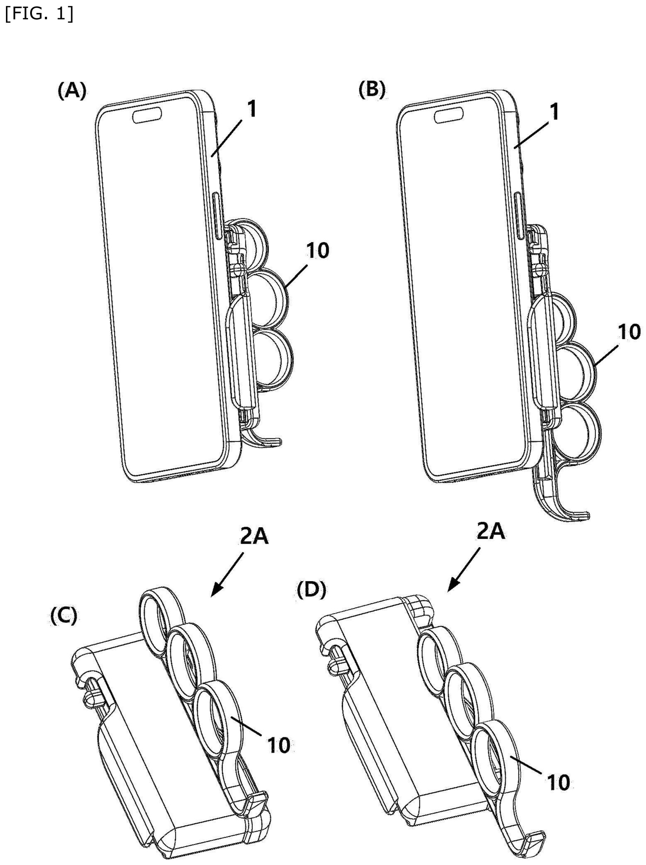

FIG. 1(A) shows the state where a grip device for a portable electronic device (2A), such as that shown in FIG. 1(C) according to the first embodiment of the present invention, is attached to a portable electronic device (1).

FIG. 1(B) shows the state where the grip (10) is moved backward in the grip device for a portable electronic device (2A) of FIG. 1(A).

FIG. 1(C) shows a view of the grip device for a portable electronic device (2A) according to the first embodiment of the present invention.

FIG. 1(D) is an operational state diagram of the grip device for a portable electronic device (2A) of FIG. 1(C), showing the state where the grip (10) is moved backward.

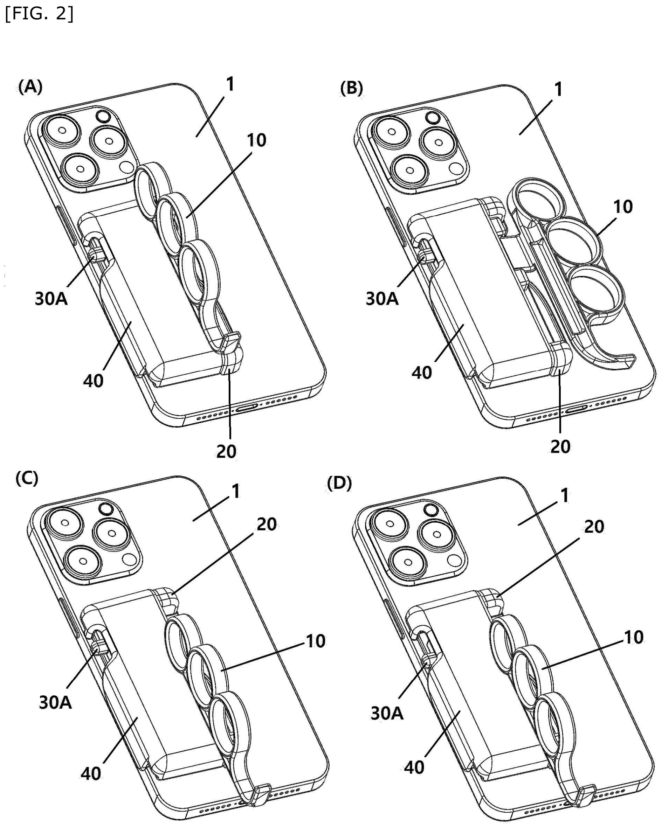

FIG. 2(A) shows the portable electronic device (1) of FIG. 1(A) and the grip device for a portable electronic device (2A) attached thereto, viewed from a different angle.

FIGS. 2(B), (C), and (D) are diagrams showing the operational state of the grip device for a portable electronic device (2A) in FIG. 2(A).

FIG. 2(A) shows the state where the grip (10) is moved forward and is in an upright state.

FIG. 2(B) shows the state where the grip (10) is tilted to one side (to the right in the drawing).

FIG. 2(C) shows the state where the grip (10) is moved backward and is in an upright state.

FIG. 2(D) shows the state where the first member (30A) is moved backward in FIG. 2(C).

In this embodiment, the portable electronic device (1) is in the shape of a smartphone, but this is an example and is not limited thereto.

The portable electronic device (1) may be, for example, a mobile phone, a smartphone, or a tablet computer, but is not limited thereto.

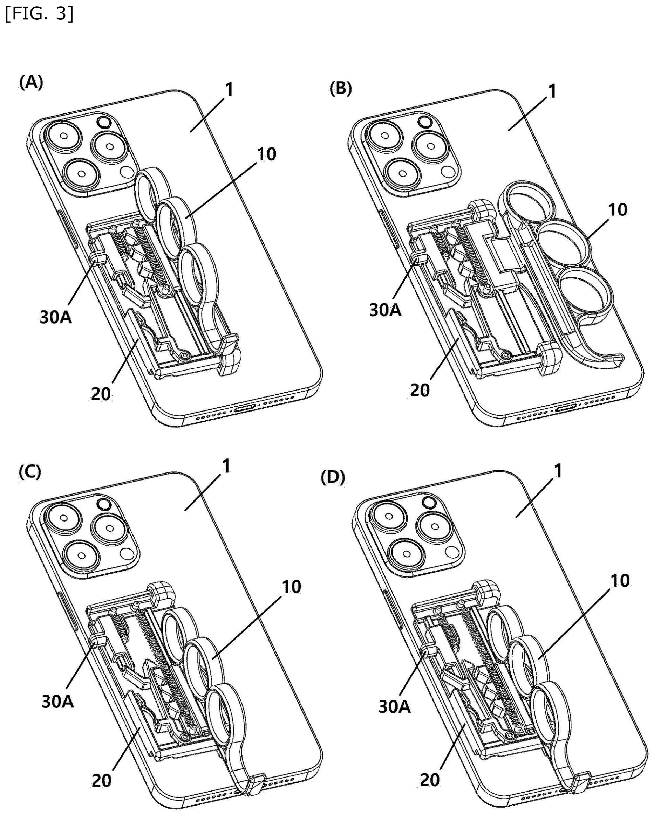

FIGS. 3(A), (B), (C), and (D) show the state where the cover (40) is removed in FIGS. 2(A), (B), (C), and (D).

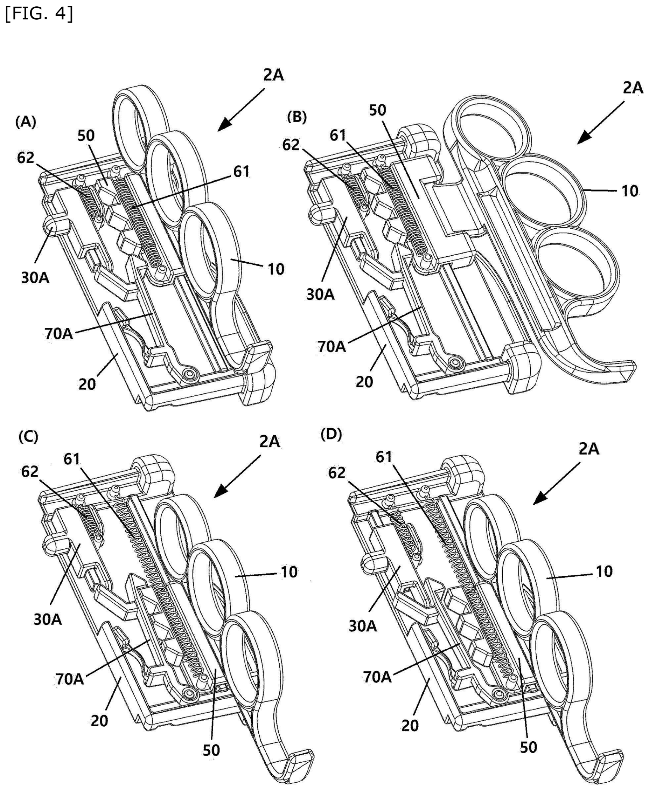

FIGS. 4(A), (B), (C), and (D) show the state where the portable electronic device (1) is removed in FIGS. 3(A), (B), (C), and (D).

As shown in FIG. 4, the grip device for a portable electronic device (2A) may include a grip (10), a base (20), a plate (50), a first member (30A), and a second member (70A).

The grip device for a portable electronic device (2A) may include a first spring (61) as needed, and may also include a second spring (62) as needed.

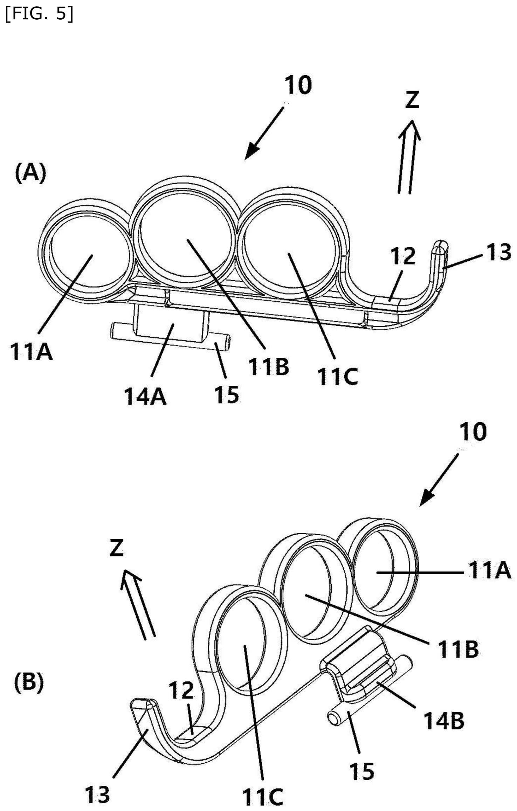

FIG. 5(A) shows the shape of the grip (10), and FIG. 5(B) shows the grip (10) of FIG. 5(A) viewed from a different angle.

The grip (10) may have one or more finger holes (11A, 11B, 11C).

In the drawing, three finger holes (11A, 11B, 11C) are formed in series on the grip (10), with the finger hole (11A) formed at the front, the finger hole (11B) formed behind the finger hole (11A), and the finger hole (11C) formed behind the finger hole (11B).

The grip (10) may have a finger rest (12) behind the plurality of finger holes (11A, 11B, 11C), and a support rod (13) may be formed upward for a predetermined length at the rear part of the finger rest (12).

In the drawing, the finger rest (12) is formed behind the rearmost finger hole (11C) among the finger holes (11A, 11B, 11C), and the support rod (13) is formed upward for a predetermined length at the rear part of the finger rest (12).

For example, the user's index finger may be inserted into the finger hole (11A), the middle finger into the finger hole (11B), the ring finger into the finger hole (11C), and the pinky finger may be placed on the finger rest (12).

The top (Z side) of the finger rest (12) is open, allowing the user's finger placed on the finger rest (12) to escape freely toward the top of the finger rest (12).

The support rod (13) can serve to support the portable electronic device (1) when attempting to stand the portable electronic device (1) upright while the grip device for a portable electronic device (2A) is attached to the portable electronic device (1).

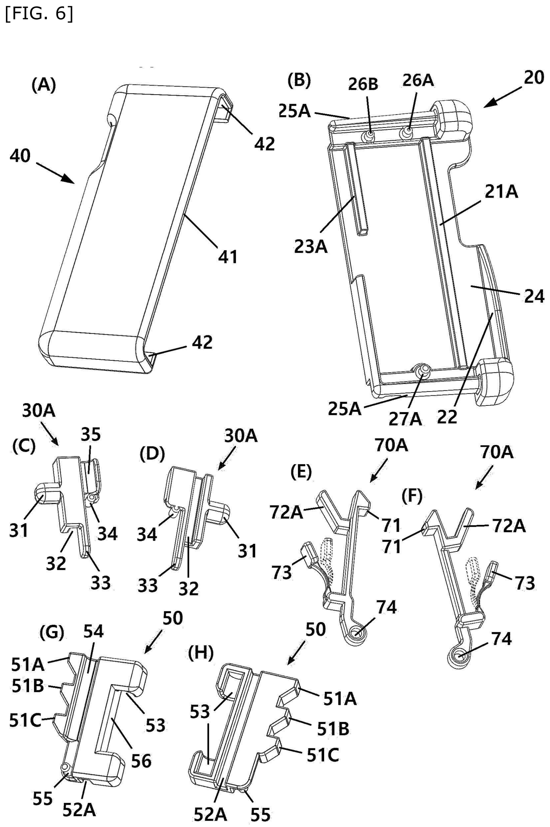

FIG. 6(A) separately shows the shape of the cover, and FIG. 6(B) separately shows the shape of the base.

Slide grooves (42) are respectively formed on the inner sides of both sides of the cover (40). Therefore, the base (20) and the cover (40) can be coupled as shown in FIGS. 1 and 2, as both side parts (25A) of the base (20) are respectively inserted into the slide grooves (42).

A first guide rail (21A), a second guide rail (23A), a spring coupling protrusion (26A), a spring coupling protrusion (26B), and a shaft (27A) are formed on the base (20).

The first guide rail (21A) is formed on the top surface (24) of the base (20), protruding upward.

The base (20) may be attached or coupled to the portable electronic device (1).

Methods for attaching the base (20) to the portable electronic device (1) can be, for example, by adhesive, or double-sided adhesive tape, or magnet, or screw, or bolt and nut, but are not limited thereto.

The base (20) may also be indirectly attached or coupled to the portable electronic device (1), for example, the base (20) may be indirectly attached or coupled to the portable electronic device (1) with a portable electronic device case in between.

The base (20) may be attached or coupled to the portable electronic device (1) by installing or mounting the base (20) on the portable electronic device (1).

The base (20) may be detachably attached or coupled to the portable electronic device (1).

Alternatively, the base (20) may be attached to the portable electronic device (1) and formed as a single body with the portable electronic device (1).

As described above, the manner in which the base (20) is attached or coupled to the portable electronic device (1) can also be applied to the embodiments described later.

FIG. 6(C) separately shows the shape of the first member (30A), and FIG. 6(D) shows the first member (30A) of FIG. 6(C) viewed from a different angle in an inverted state.

The first member (30A) may have a button (31), a guide groove (32), a pusher (33), and a spring coupling protrusion (34).

The second guide rail (23A) formed on the base (20) and the guide groove (32) formed on the first member (30A) are coupled, allowing the first member (30A) to slide back and forth along the second guide rail (23A).

The second spring (62) can be coupled between the spring coupling protrusion (26B) formed on the base (20) and the spring coupling protrusion (34) formed on the first member (30A), as shown in FIG. 4.

A spring receiving groove (35) is formed on the first member (30A), allowing the second spring (62) to be positioned within the spring receiving groove (35).

The second spring (62) may be a tension coil spring, but is not limited thereto.

The first member (30A) may be pulled or moved forward by the second spring (62), as shown in FIG. 4(A).

FIG. 6(E) separately shows the shape of the second member (70A), and FIG. 6(F) shows the second member (70A) of FIG. 6(E) viewed from a different angle in an inverted state.

The second member (70A) may have a locking protrusion (71), a pusher coupling part (72A), and a pivot hole (74), and may also have an elastic part (73) as needed.

The second member (70A) can pivot a predetermined angle about the shaft (27A) formed on the base (20), while the shaft (27A) is inserted into the pivot hole (74) formed on the second member (70A).

The elastic part (73) may be formed as a single body with the second member (70A), or a separate elastic part (73) may be coupled or installed on the second member (70A).

The elastic part (73) may be, for example, in the shape of a leaf spring or a torsion spring, but is not limited thereto.

As shown in FIGS. 6(E) and (F), the elastic part (73) indicated by the solid line can be bent inward by a predetermined angle, like the part indicated by the dotted line, and the elastic part (73) thus bent can be restored to its original state by its own elasticity.

FIG. 6(G) separately shows the shape of the plate (50), and FIG. 6(H) shows the plate (50) of FIG. 6(G) viewed from a different angle in an inverted state.

The plate (50) may have one or more locking parts (51A, 51B, 51C) that can be coupled to the locking protrusion (71).

In the drawing, three locking parts (51A, 51B, 51C) are formed on the plate (50).

The locking part (51A) is formed at the very front, the locking part (51B) is formed behind the locking part (51A), and the locking part (51C) is formed behind the locking part (51B).

In the drawing, the locking parts (51A, 51B, 51C) are each in the shape of a serration, but this is an example and is not limited thereto.

A guide groove (52A) may be formed on the bottom surface of the plate (50).

The first guide rail (21A) formed on the base (20) and the guide groove (52A) formed on the plate (50) are coupled, allowing the plate (50) to slide back and forth along the first guide rail (21A).

The plate (50) may have a shaft receiving groove (53) for accommodating the shaft (15) of the grip (10).

The shaft receiving groove (53) may be in a shape where its bottom is open.

The grip (10) can be rotated a predetermined angle about the shaft (15) while the shaft (15) of the grip (10) is accommodated in the shaft receiving groove (53) whose bottom is open.

The shaft (15) can slide back and forth while being in contact with the top surface (24) of the base (20), as shown in FIGS. 4(A) and (C), when the plate (50) and the grip (10) are moved back and forth while the shaft (15) is accommodated in the shaft receiving groove (53) whose bottom is open.

The first spring (61) can be coupled between the spring coupling protrusion (55) formed on the plate (50) and the spring coupling protrusion (26A) formed on the base (20), as shown in FIG. 4.

The plate (50) has a spring receiving groove (54), allowing the first spring (61) to be positioned within the spring receiving groove (54).

The first spring (61) may be a tension coil spring, but is not limited thereto.

The plate (50) can be pulled or moved forward by the first spring (61), as shown in FIG. 4(A).

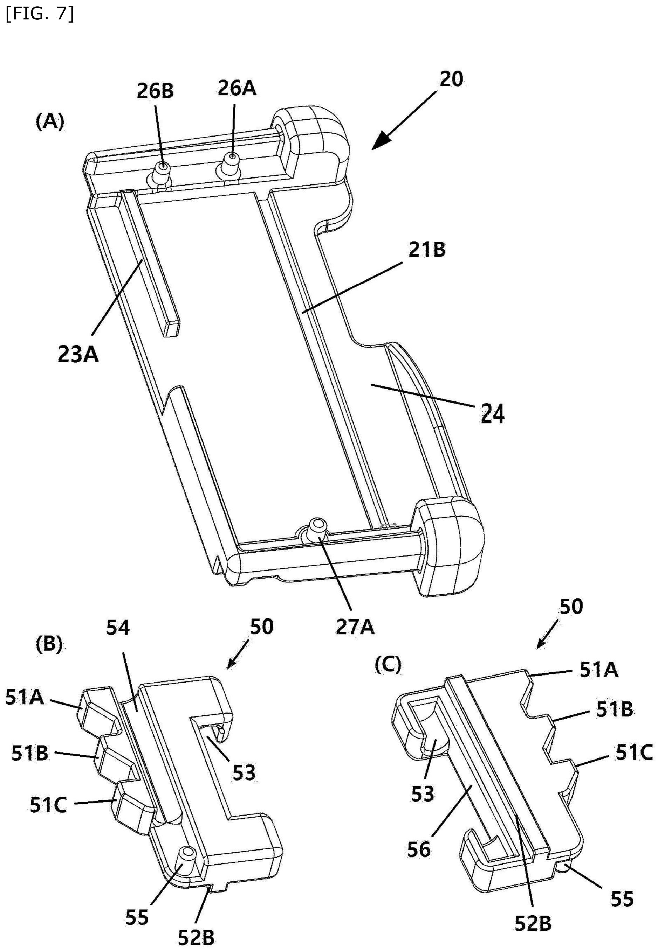

Instead of the first guide rail (21A) being formed on the base (20) as in FIG. 6(A), a first guide groove (21B) may be formed on the top surface (24) of the base (20) as in FIG. 7(A).

Instead of the guide groove (52A) being formed on the bottom surface of the plate (50) as in FIGS. 6(G) and (H), a guide rail (52B) may be formed on the bottom surface of the plate (50) as in FIGS. 7(B) and (C).

FIG. 7(C) shows the plate (50) of FIG. 7(B) in an inverted state.

The plate (50) can slide back and forth along the first guide groove (21B) as the first guide groove (21B) and the guide rail (52B) are coupled.

FIG. 4(A) shows the state where the plate (50) and the grip (10) are moved forward, the first member (30A) is moved forward, and the locking protrusion (71) of the second member (70A) is pushed toward the plate (50) by the elastic part (73).

When the plate (50) and the grip (10) are moved forward as in FIG. 4(A), and the plate (50) and the grip (10) are moved backward beyond a predetermined distance as in FIG. 4(C), the locking protrusion (71) is coupled to one of the locking parts (51A, 51B, 51C), preventing the plate (50) from moving forward. (In FIG. 4(C), the locking protrusion (71) is coupled to the foremost locking part (51A)).

When the plate (50) and the grip (10) are moved backward as in FIG. 4(C), and the first member (30A) slides backward a predetermined distance as in FIG. 4(D), the pusher (33) of the first member (30A) pushes the pusher coupling part (72A) of the second member (70A) toward the opposite side of the plate (50), causing the second member (70A) to pivot a predetermined angle toward the opposite side of the plate (50) (counterclockwise in the drawing).

When the second member (70A) pivots a predetermined angle toward the opposite side of the plate (50) as in FIG. 4(D), the locking protrusion (71) is separated from the locking part it was coupled to, allowing the plate (50) to be moved forward by the first spring (61), as in FIG. 4(A).

When the grip (10) is moved forward and in an upright state as in FIG. 4(A), the grip (10) can be tilted to one side about the shaft (15) as in FIG. 4(B), but cannot be tilted to the opposite side because a side (14A) of the grip (10) comes into contact with a side (56) of the plate (50).

When the grip (10) is moved backward as in FIG. 4(C), the grip (10) is positioned between the side (56) of the plate (50) and the side wall (22) of the base (20), and the side (14A) and the other side (14B) of the grip (10) are supported by the side (56) of the plate (50) and the side wall (22) of the base (20), thereby preventing the grip (10) from being tilted to the left or right about the shaft (15), and maintaining the state of being upright at a predetermined angle.

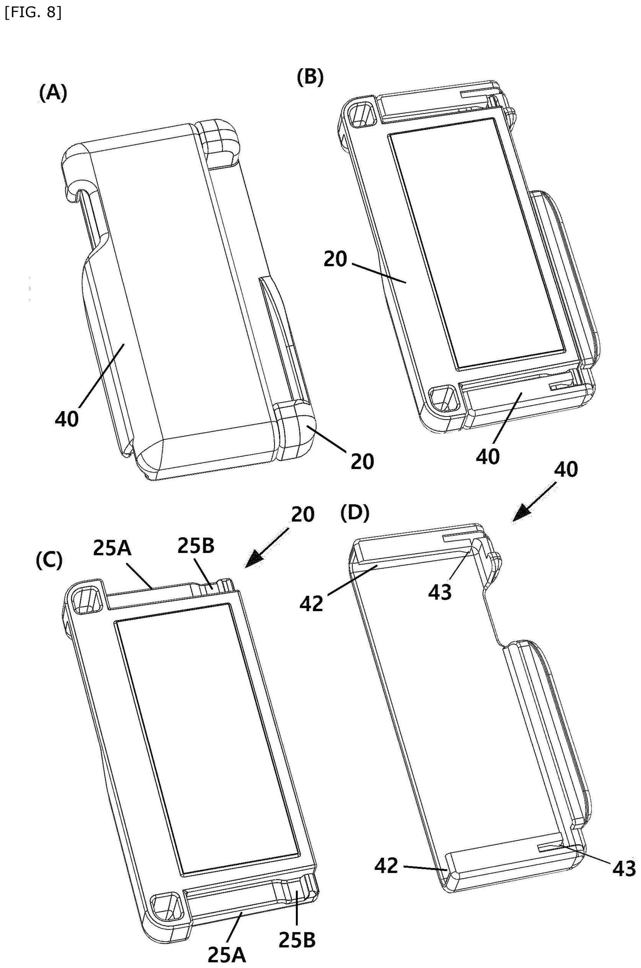

FIG. 8(A) shows the coupled state of the base (20) and the cover (40).

FIG. 8(B) shows the state where the base (20) and the cover (40) are coupled as in FIG. 8(A) and inverted so that the bottom side faces upward.

FIG. 8(C) separately shows the shape of the base (20) in the inverted state as in FIG. 8(B).

FIG. 8(D) separately shows the shape of the cover (40) in the inverted state as in FIG. 8(B).

As shown in FIG. 8(C), coupling grooves (25B) are respectively formed on the lower parts of both sides of the base (20).

As shown in FIG. 8(D), coupling protrusions (43) are respectively formed on both sides of the cover (40).

When the both side parts (25A) of the base (20) are respectively inserted into the slide grooves (42) of the cover (40) and the base (20) and the cover (40) are coupled as in FIG. 8(B), the coupling grooves (25B) and the coupling protrusions (43) are respectively coupled, which effectively prevents the cover (40) and the base (20) from being easily separated.

The manner in which the base (20) and the cover (40) are coupled in FIG. 8 can also be applied in the embodiments described later.

When the grip (10) is moved forward and in an upright state as in FIG. 2(A), the grip (10) can be tilted to one side about the predetermined axis or about the shaft (15) as in FIG. 2(B), but cannot be tilted to the opposite side because a side (14A) of the grip (10) comes into contact with a side (41) of the cover (40).

When the grip (10) is moved forward and in an upright state as in FIG. 2(A), and the grip (10) is moved backward as in FIG. 2(C), the grip (10) is positioned between the side (41) of the cover (40) and the side wall (22) of the base (20), and the side (14A) and the other side (14B) of the grip (10) are supported by the side (41) of the cover (40) and the side wall (22) of the base (20), thereby preventing the grip (10) from being tilted to the left or right, and maintaining the state of being upright at a predetermined angle.

### << SECOND EMBODIMENT >>

Hereinafter, the description of contents overlapping with the previously described embodiment may be omitted.

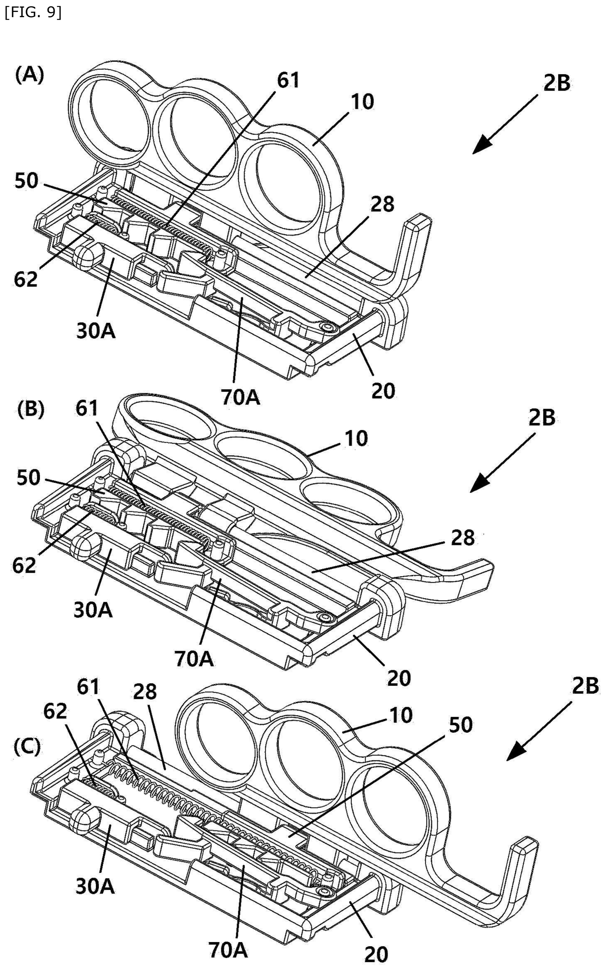

FIG. 9(A) shows a view of the grip device for a portable electronic device (2B) according to the second embodiment of the present invention.

FIGS. 9(B) and 9(C) are diagrams showing the operational state of the grip device for a portable electronic device (2B) of FIG. 9(A).

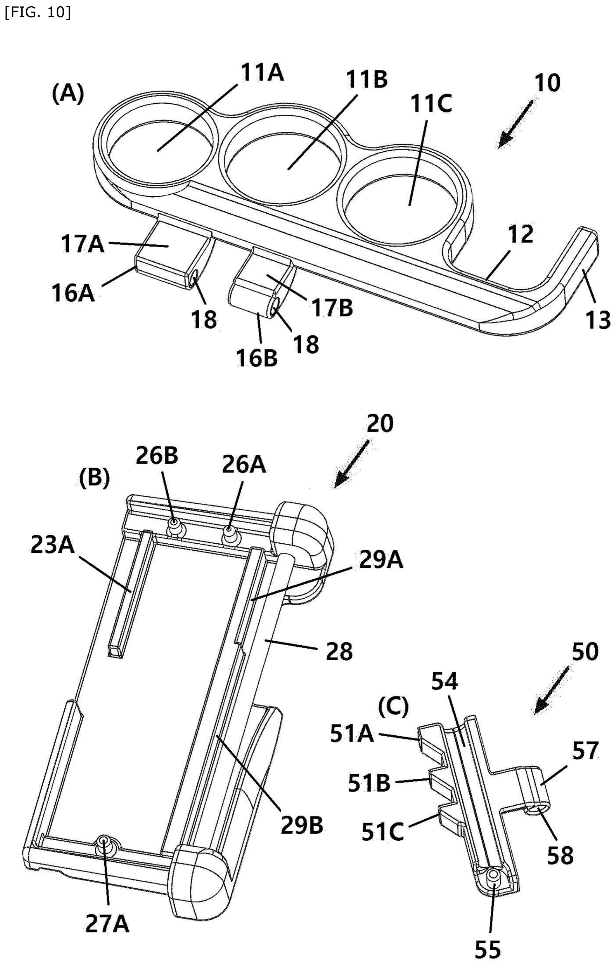

FIG. 10(A) shows the shape of the grip (10) included in the grip device for a portable electronic device (2B).

A first protrusion (16A) and a second protrusion (16B) are formed on the lower part of the grip (10), and the first protrusion (16A) and the second protrusion (16B) respectively have a rod insertion hole (18).

The first protrusion (16A) has a first side (17A), and the second protrusion (16B) has a second side (17B).

FIG. 10(B) shows the shape of the base (20) included in the grip device for a portable electronic device (2B).

A guide rod (28) may be formed or installed on the base (20).

The grip (10) can slide back and forth along the guide rod (28), and the grip (10) can also be rotated a predetermined angle about the guide rod (28), while the guide rod (28) is located within the rod insertion hole (18) of the grip (10).

The base (20) may have a first side (29A) and a second side (29B), and the first side (29A) may be formed slightly recessed inward compared to the second side (29B).

Therefore, when the plate (50) and the grip (10) are moved forward and the grip (10) is in an upright state as in FIG. 9(A), and the grip (10) is tilted to one side about the guide rod (28) as in FIG. 9(B), the first protrusion (16A) does not catch on the first side (29A) of the base (20).

FIG. 10(C) shows the shape of the plate (50) included in the grip device for a portable electronic device (2B).

The plate (50) of FIG. 10(C) has a protrusion (57) that is formed to protrude a predetermined length from one side, and the protrusion (57) has a rod insertion hole (58), allowing the plate (50) to slide back and forth along the guide rod (28) while the guide rod (28) is located within the rod insertion hole (58).

When the grip (10) and the plate (50) slide along the guide rod (28), the protrusion (57) of the plate (50) is positioned between the first protrusion (16A) and the second protrusion (16B) of the grip (10), allowing the grip (10) and the plate (50) to slide back and forth together along the guide rod (28).

When the plate (50) and the grip (10) are moved forward and the grip (10) is in an upright state as in FIG. 9(A), the grip (10) can be tilted to one side about the guide rod (28) as in FIG. 9(B), but cannot be tilted to the opposite side because the second side (17B) of the grip (10) comes into contact with the second side (29B) of the base (20).

When the plate (50) and the grip (10) are moved forward along the guide rod (28) and the grip (10) is in an upright state as in FIG. 9(A), and the plate (50) and the grip (10) are moved backward along the guide rod (28) as in FIG. 9(C), the first side (17A) of the grip (10) comes into contact with the second side (29B) of the base, thereby preventing the grip (10) from being tilted to the left or right about the guide rod (28), and maintaining the upright state.

The mode in which the guide rod (28) is formed or installed on the base (20) and the plate (50) and the grip (10) operate in conjunction with the guide rod (28), as in the grip device for a portable electronic device (2B) of FIG. 9, can also be applied to the previously described grip device for a portable electronic device (2A) and the grip devices for a portable electronic device (2C, 2D, 2E) described later.

### << THIRD EMBODIMENT >>

Hereinafter, the description of contents overlapping with the previously described embodiments may be omitted.

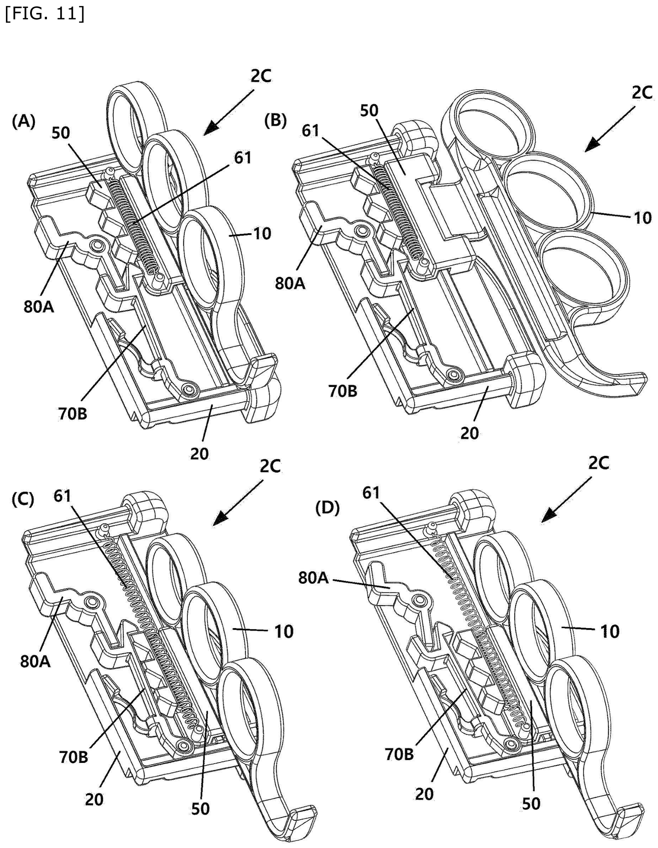

FIG. 11(A) shows a view of the grip device for a portable electronic device (2C) according to the third embodiment of the present invention.

FIGS. 11(B), (C), and (D) are diagrams showing the operational state of the grip device for a portable electronic device (2C) of FIG. 11(A).

The grip device for a portable electronic device (2C) may include a grip (10), a base (20), a plate (50), a first member (80A), and a second member (70B), and may also include a first spring (61) as needed.

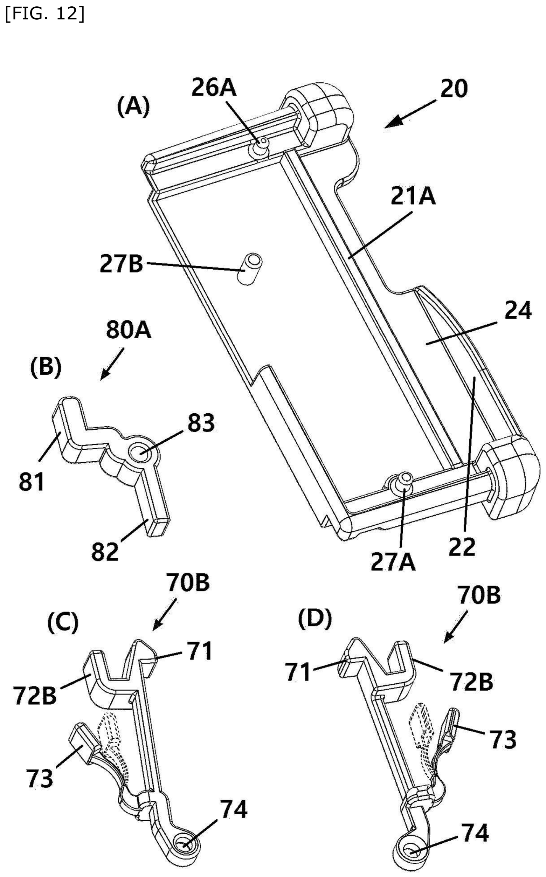

FIG. 12(A) shows the shape of the base (20) included in the grip device for a portable electronic device (2C).

A shaft (27B) is formed on the base (20) of FIG. 12(A).

FIG. 12(B) shows the shape of the first member (80A) included in the grip device for a portable electronic device (2C).

The first member (80A) of FIG. 12(B) may have a button (81), a lower rod (82), and a pivot hole (83).

The first member (80A) can pivot a predetermined angle about the shaft (27B) of the base (20), while the shaft (27B) of the base (20) is inserted into the pivot hole (83) of the first member (80A).

FIG. 12(C) shows the shape of the second member (70B) included in the grip device for a portable electronic device (2C), and FIG. 12(D) shows the second member (70B) of FIG. 12(C) in an inverted state.

The second member (70B) may have a locking protrusion (71), a lower rod coupling part (72B), and a pivot hole (74), and may also have an elastic part (73) as needed.

FIG. 11(A) shows the state where the plate (50) and the grip (10) are moved forward, and the locking protrusion (71) of the second member (70B) is pushed toward the plate (50) by the elastic part (73).

FIG. 11(B) shows the state where the grip (10) is tilted to one side (to the right in the drawing).

When the plate (50) and the grip (10) are moved forward as in FIG. 11(A), and the plate (50) and the grip (10) are moved backward beyond a predetermined distance as in FIG. 11(C), the locking protrusion (71) is coupled to one of the locking parts (51A, 51B, 51C), preventing the plate (50) from moving forward. (In FIG. 11(C), the locking protrusion (71) is coupled to the foremost locking part (51A)).

When the plate (50) and the grip (10) are moved backward beyond a predetermined distance as in FIG. 11(C), and the button (81) of the first member (80A) is pressed inward as in FIG. 11(D), the first member (80A) pivots a predetermined angle, and the lower rod (82) of the first member (80A) pushes the lower rod coupling part (72B) of the second member (70B) toward the opposite side of the plate (50), causing the second member (70B) to pivot a predetermined angle toward the opposite side of the plate (50) (counterclockwise in the drawing).

When the second member (70B) pivots a predetermined angle toward the opposite side of the plate (50) as in FIG. 11(D), the locking protrusion (71) is separated from the locking part it was coupled to, allowing the plate (50) to be pulled or moved forward by the first spring (61), as in FIG. 11(A).

### << FOURTH EMBODIMENT >>

Hereinafter, the description of contents overlapping with the previously described embodiments may be omitted.

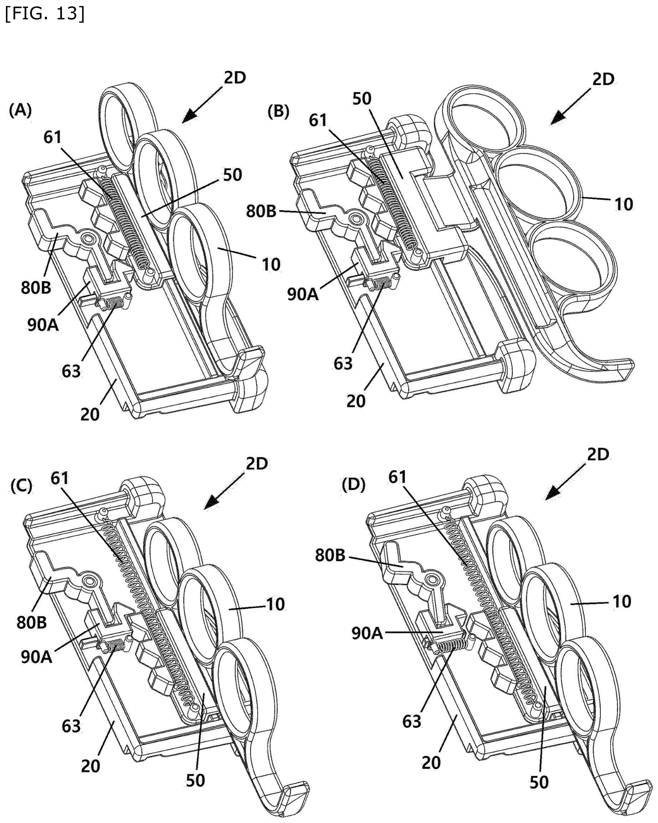

FIG. 13(A) shows a view of the grip device for a portable electronic device (2D) according to the fourth embodiment of the present invention.

FIGS. 13(B), (C), and (D) are diagrams showing the operational state of the grip device for a portable electronic device (2D) of FIG. 13(A).

The grip device for a portable electronic device (2D) may include a grip (10), a base (20), a plate (50), a first member (80B), and a second member (90A), and may also include a first spring (61) as needed, and may also include a third spring (63) as needed.

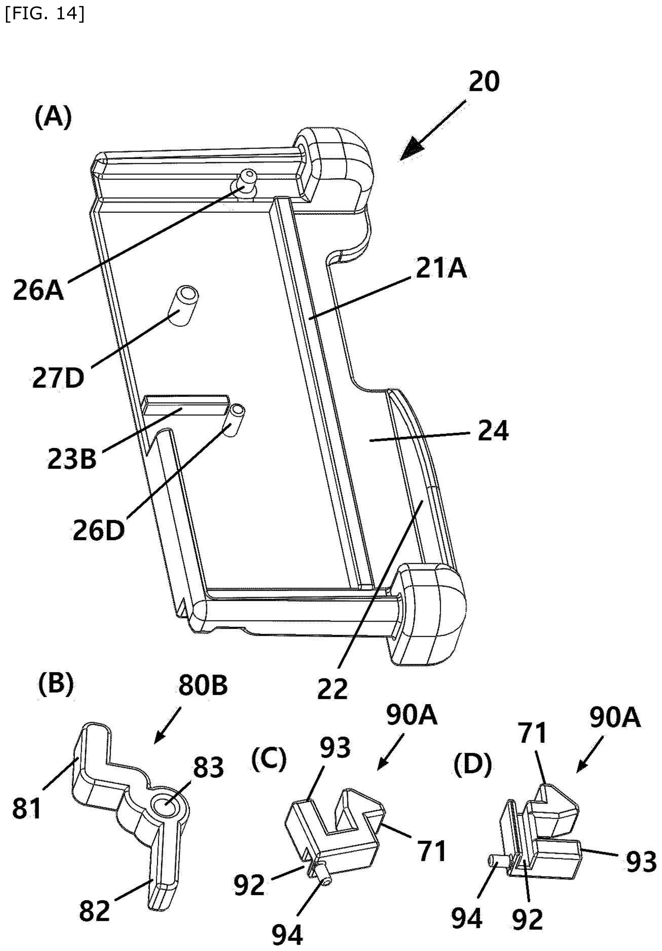

FIG. 14(A) shows the shape of the base (20) included in the grip device for a portable electronic device (2D).

A shaft (27D) and a third guide rail (23B) are formed on the base (20) of FIG. 14(A), and a spring coupling protrusion (26D) is also formed.

FIG. 14(B) shows the shape of the first member (80B) included in the grip device for a portable electronic device (2D).

The first member (80B) may have a button (81), a lower rod (82), and a pivot hole (83).

The first member (80B) can be rotated a predetermined angle about the shaft (27D) of the base (20), while the shaft (27D) is inserted into the pivot hole (83) of the first member (80B).

FIG. 14(C) shows the shape of the second member (90A) included in the grip device for a portable electronic device (2D), and FIG. 14(D) shows the second member (90A) of FIG. 14(C) viewed from a different angle in an inverted state.

A locking protrusion (71), a guide groove (92), a lower rod coupling part (93), and a spring coupling protrusion (94) are formed on the second member (90A) of FIG. 14(C).

The third guide rail (23B) of the base (20) and the guide groove (92) of the second member (90A) are coupled, allowing the second member (90A) to slide left and right along the third guide rail (23B).

The third spring (63) can be coupled between the spring coupling protrusion (26D) formed on the base (20) and the spring coupling protrusion (94) formed on the second member (90A).

In the drawing, the third spring (63) is a tension coil spring, but this is an example and is not limited thereto.

The position and manner in which the third spring (63) is installed on the base (20) are examples and are not limited thereto.

The second member (90A) can be moved toward the plate (50) (to the right in the drawing) by the third spring (63).

FIG. 13(A) shows the state where the plate (50) and the grip (10) are moved forward, and the second member (90A) is moved toward the plate (50) (to the right in the drawing) by the third spring (63).

FIG. 13(B) shows the state where the grip (10) is tilted to one side (to the right in the drawing) in the grip device for a portable electronic device (2D) of FIG. 13(A).

When the plate (50) and the grip (10) are moved forward as in FIG. 13(A), and the plate (50) and the grip (10) are moved backward beyond a predetermined distance as in FIG. 13(C), the locking protrusion (71) is coupled to one of the locking parts (51A, 51B, 51C), preventing the plate (50) from moving forward. (In FIG. 13(C), the locking protrusion (71) is coupled to the foremost locking part (51A)).

When the plate (50) and the grip (10) are moved backward beyond a predetermined distance as in FIG. 13(C), and the button (81) of the first member (80B) is pressed inward as in FIG. 13(D), the first member (80B) pivots a predetermined angle, and the lower rod (82) of the first member (80B) pushes the lower rod coupling part (93) of the second member (90A) toward the opposite side of the plate (50), causing the second member (90A) to slide toward the opposite side of the plate (50) (to the left in the drawing).

When the second member (90A) slides a predetermined distance toward the opposite side of the plate (50) as in FIG. 13(D), the locking protrusion (71) is separated from the locking part it was coupled to, allowing the plate (50) to be pulled or moved forward by the first spring (61), as in FIG. 13(A).

### << FIFTH EMBODIMENT >>

Hereinafter, the description of contents overlapping with the previously described embodiments may be omitted.

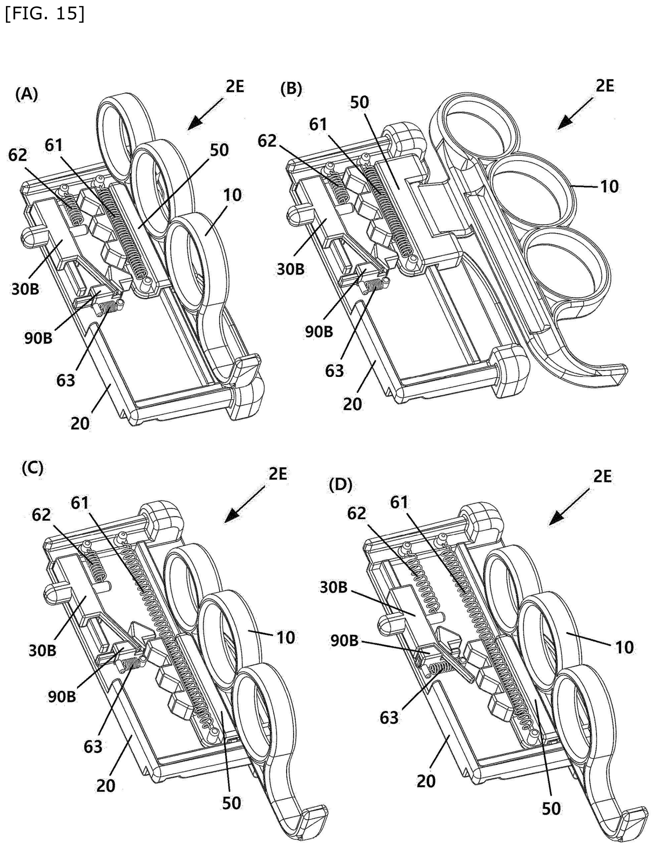

FIG. 15(A) shows a view of the grip device for a portable electronic device (2E) according to the fifth embodiment of the present invention.

FIGS. 15(B), (C), and (D) are diagrams showing the operational state of the grip device for a portable electronic device (2E) of FIG. 15(A).

The grip device for a portable electronic device (2E) may include a grip (10), a base (20), a plate (50), a first member (30B), and a second member (90B).

The grip device for a portable electronic device (2E) may include a second spring (62) as needed, and the first member (30B) may be pulled or moved forward by the second spring (62).

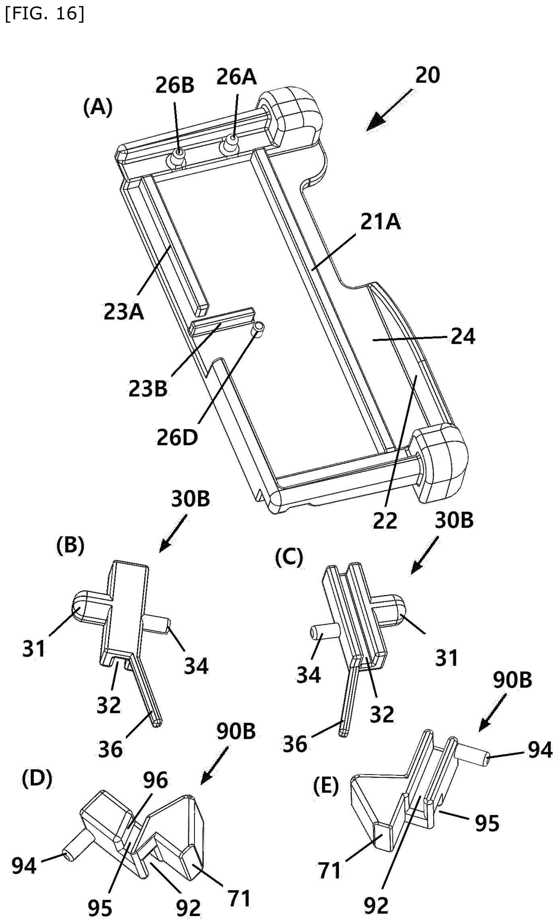

FIG. 16(A) shows the shape of the base (20) included in the grip device for a portable electronic device (2E).

A second guide rail (23A) and a third guide rail (23B) are formed on the base (20) of FIG. 16(A).

FIG. 16(B) shows the shape of the first member (30B) included in the grip device for a portable electronic device (2E), and FIG. 16(C) shows the first member (30B) of FIG. 16(B) viewed from a different angle in an inverted state.

A button (31), a guide groove (32), a spring coupling protrusion (34), and a lower rod (36) are formed on the first member (30B).

The lower rod (36) of the first member (30B) is formed to extend a predetermined length diagonally from the direction of the guide groove (32).

The second guide rail (23A) of the base (20) and the guide groove (32) of the first member (30B) are coupled, allowing the first member (30B) to slide back and forth along the second guide rail (23A).

FIG. 16(D) shows the shape of the second member (90B) included in the grip device for a portable electronic device (2E), and FIG. 16(E) shows the second member (90B) of FIG. 16(D) viewed from a different angle in an inverted state.

The second member (90B) may have a locking protrusion (71), a guide groove (92), a spring coupling protrusion (94), a lower rod receiving groove (95), and a lower rod contact surface (96).

The lower rod receiving groove (95) of the second member (90B) is formed to intersect with the direction of the guide groove (92).

The third guide rail (23B) of the base (20) and the guide groove (92) of the second member (90B) are coupled, allowing the second member (90B) to slide left and right along the third guide rail (23B).

The second member (90B) can be moved toward the plate (50) (to the right in the drawing) by the third spring (63).

The lower rod (36) of the first member (30B) may be located within the lower rod receiving groove (95) of the second member (90B) and slide, or the lower rod (36) of the first member (30B) may slide in contact with the lower rod contact surface (96) of the second member (90B).

FIG. 15(A) shows the state where the plate (50) and the grip (10) are moved forward, the first member (30B) is moved forward by the second spring (62), and the second member (90B) is moved toward the plate (50) (to the right in the drawing) by the third spring (63).

FIG. 15(B) shows the state where the grip (10) is tilted to one side (to the right in the drawing).

When the plate (50) and the grip (10) are moved forward as in FIG. 15(A), and the plate (50) and the grip (10) are moved backward beyond a predetermined distance as in FIG. 15(C), the locking protrusion (71) is coupled to one of the locking parts (51A, 51B, 51C), preventing the plate (50) from moving forward. (In FIG. 15(C), the locking protrusion (71) is coupled to the foremost locking part (51A)).

When the plate (50) and the grip (10) are moved backward beyond a predetermined distance as in FIG. 15(C), and the first member (30B) slides backward a predetermined distance as in FIG. 15(D), the lower rod (36) slides while being located within the lower rod receiving groove (95) or slides in contact with the lower rod contact surface (96), causing the second member (90B) to slide a predetermined distance toward the opposite side of the plate (50) (to the left in the drawing).

When the second member (90B) slides a predetermined distance toward the opposite side of the plate (50) as in FIG. 15(D), the locking protrusion (71) is separated from the locking part it was coupled to, allowing the plate (50) to be pulled or moved forward by the first spring (61), as in FIG. 15(A).

Any reference signs positioned between parentheses in the claims shall not be construed as limiting the claim.

### << DESCRIPTION OF MAIN REFERENCE NUMERALS >>

1: Portable electronic device
2A, 2B, 2C, 2D, 2E: Grip device for portable electronic device
10: Grip
20: Base
30A, 30B: First member
40: Cover
50: Plate
61: First spring
62: Second spring
63: Third spring
70A, 70B: Second member
80A, 80B: First member
90A, 90B: Second member

## Claims

1. A grip device for a portable electronic device, comprising:
a base (20) attached to the portable electronic device;
a first member (30A, 30B, 80A, 80B) coupled to the base (20);
a second member (70A, 70B, 90A, 90B) having a locking protrusion (71), coupled to the base (20), and operating in conjunction with the first member (30A, 30B, 80A, 80B);
a plate (50) having one or more locking parts (51A, 51B, 51C) that can be coupled to the locking protrusion (71), and coupled to the base (20) so as to be slidable back and forth a predetermined distance; and
a grip (10) having one or more finger holes (11A, 11B, 11C) and coupled to the plate (50) so as to be rotatable a predetermined angle about a predetermined axis.

2. The grip device for a portable electronic device according to claim 1, wherein:
the first member (30A) is coupled to the base (20) so as to be slidable back and forth a predetermined distance;
the second member (70A) is coupled to the base (20) so as to be pivotable a predetermined angle; and
the second member (70A) pivots a predetermined angle toward the opposite side of the plate (50) as the first member (30A) slides backward a predetermined distance.

3. The grip device for a portable electronic device according to claim 2, wherein:
as the first member (30A) slides backward a predetermined distance, a pusher (33) formed on the first member (30A) pushes a pusher coupling part (72A) formed on the second member (70A) toward the opposite side of the plate (50), causing the second member (70A) to pivot a predetermined angle toward the opposite side of the plate (50).

4. The grip device for a portable electronic device according to claim 1, wherein:
the first member (80A) is coupled to the base (20) so as to be pivotable a predetermined angle;
the second member (70B) is coupled to the base (20) so as to be pivotable a predetermined angle; and
the second member (70B) pivots a predetermined angle toward the opposite side of the plate (50) as the first member (80A) pivots a predetermined angle in a predetermined direction.

5. The grip device for a portable electronic device according to claim 4, wherein:
as the first member (80A) pivots a predetermined angle in a predetermined direction, a lower rod (82) of the first member (80A) pushes a lower rod coupling part (72B) of the second member (70B) toward the opposite side of the plate (50), causing the second member (70B) to pivot a predetermined angle toward the opposite side of the plate (50).

6. The grip device for a portable electronic device according to claim 1, wherein:
the first member (80B) is coupled to the base (20) so as to be pivotable a predetermined angle;
the second member (90A) is coupled to the base (20) so as to be slidable left and right a predetermined distance; and
the second member (90A) slides a predetermined distance toward the opposite side of the plate (50) as the first member (80B) pivots a predetermined angle in a predetermined direction.

7. The grip device for a portable electronic device according to claim 6, wherein:
as the first member (80B) pivots a predetermined angle in a predetermined direction, a lower rod (82) formed on the first member (80B) pushes a lower rod coupling part (93) formed on the second member (90A) toward the opposite side of the plate (50), causing the second member (90A) to slide a predetermined distance toward the opposite side of the plate (50).

8. The grip device for a portable electronic device according to claim 1, wherein:
the first member (30B) is coupled to the base (20) so as to be slidable back and forth a predetermined distance;
the second member (90B) is coupled to the base (20) so as to be slidable left and right a predetermined distance; and
the second member (90B) slides a predetermined distance toward the opposite side of the plate (50) as the first member (30B) slides backward a predetermined distance.

9. The grip device for a portable electronic device according to claim 8, wherein:
as the first member (30B) slides backward a predetermined distance, a lower rod (36) formed on the first member (30B) slides in contact with a lower rod contact surface (96) formed on the second member (90B), causing the second member (90B) to slide a predetermined distance toward the opposite side of the plate (50).

10. The grip device for a portable electronic device according to claim 1, further comprising a first spring (61), wherein the plate (50) can be pulled or moved forward by the first spring (61).

11. The grip device for a portable electronic device according to claim 1, further comprising a second spring (62), wherein the first member (30A, 30B) can be pulled or moved forward by the second spring (62).

12. The grip device for a portable electronic device according to claim 1, further comprising a third spring (63), wherein the second member (90A, 90B) can be moved toward the plate (50) by the third spring (63).

13. The grip device for a portable electronic device according to claim 1, wherein:
a first guide rail (21A) is formed on the top surface (24) of the base (20);
a guide groove (52A) is formed on the bottom surface of the plate (50); and
the plate (50) can slide back and forth along the first guide rail (21A) as the first guide rail (21A) and the guide groove (52A) are coupled.

14. The grip device for a portable electronic device according to claim 1, wherein:
a first guide groove (21B) is formed on the top surface (24) of the base (20);
a guide rail (52B) is formed on the bottom surface of the plate (50); and
the plate (50) can slide back and forth along the first guide groove (21B) as the first guide groove (21B) and the guide rail (52B) are coupled.

15. The grip device for a portable electronic device according to claim 1, wherein:
a guide rod (28) is formed or installed on the base (20);
the plate (50) has a guide rod insertion hole (58);
the grip (10) has a guide rod insertion hole (18); and
the plate (50) and the grip (10) can together slide back and forth along the guide rod (28), and the grip (10) can also be rotated a predetermined angle about the guide rod (28), while the guide rod (28) is located within the guide rod insertion hole (58) of the plate (50) and the guide rod insertion hole (18) of the grip (10).

16. The grip device for a portable electronic device according to claim 1, wherein:
the plate (50) has a shaft receiving groove (53) whose bottom is open;
the grip (10) can be rotated a predetermined angle about the shaft (15) of the grip (10) while the shaft (15) is accommodated in the shaft receiving groove (53); and
the shaft (15) can slide back and forth while being in contact with the top surface (24) of the base (20) while being accommodated in the shaft receiving groove (53).

17. The grip device for a portable electronic device according to claim 1, wherein:
when the plate (50) and the grip (10) are moved forward, the grip (10) can be tilted to one of the left and right sides about the predetermined axis, but cannot be tilted to the opposite side; and
when the plate (50) and the grip (10) are moved backward, the grip (10) cannot be tilted to the left or right about the predetermined axis, and a state of being upright at a predetermined angle can be maintained.

18. The grip device for a portable electronic device according to claim 17, wherein:
when the plate (50) and the grip (10) are moved backward, the grip (10) is positioned between a side (56) of the plate (50) and a side wall (22) of the base (20), and the grip (10) is supported by the side (56) of the plate (50) and the side wall (22) of the base (20), thereby preventing the grip (10) from being tilted to the left or right about the predetermined axis, and maintaining the state of being upright at a predetermined angle.

19. The grip device for a portable electronic device according to claim 17, further comprising a cover (40) coupled to the base (20), wherein:
when the plate (50) and the grip (10) are moved forward, the grip (10) can be tilted to one of the left and right sides about the predetermined axis, but cannot be tilted to the opposite side because a side of the grip (10) comes into contact with a side (41) of the cover (40).

20. The grip device for a portable electronic device according to claim 19, wherein:
when the plate (50) and the grip (10) are moved backward, the grip (10) is positioned between a side (41) of the cover (40) and a side wall (22) of the base (20), and the grip (10) is supported by the side (41) of the cover (40) and the side wall (22) of the base (20), thereby preventing the grip (10) from being tilted to the left or right about the predetermined axis, and maintaining the state of being upright at a predetermined angle.

21. The grip device for a portable electronic device according to claim 1, further comprising a cover (40) coupled to the base (20), wherein:
slide grooves (42) are respectively formed on the inner sides of both sides of the cover (40), and the base (20) and the cover (40) can be coupled as both side parts (25A) of the base (20) are respectively inserted into the slide grooves (42);
coupling grooves (25B) are respectively formed on the lower parts of both sides of the base (20);
coupling protrusions (43) are respectively formed on both sides of the cover (40); and
the coupling grooves (25B) and the coupling protrusions (43) can be respectively coupled when the side parts (25A) are respectively inserted into the slide grooves (42).

22. The grip device for a portable electronic device according to claim 1, wherein:
the grip (10) has a plurality of finger holes (11A, 11B, 11C);
a finger rest (12) is formed behind the finger holes (11A, 11B, 11C);
the top (Z) of the finger rest (12) is open; and
a user's finger can be placed on the finger rest (12).

23. The grip device for a portable electronic device according to claim 22, wherein:
a support rod (13) is formed at the rear part of the finger rest (12); and
the user's finger placed on the finger rest (12) can escape toward the top (Z) of the finger rest (12).

24. A grip device for a portable electronic device, comprising:
a base (20) attached to the portable electronic device;
a plate (50) coupled to the base (20) so as to be slidable back and forth a predetermined distance; and
a grip (10) having one or more finger holes (11A, 11B, 11C) and coupled to the plate (50) so as to be rotatable a predetermined angle about a predetermined axis, wherein:
a first guide rail (21A) is formed on the top surface (24) of the base (20);
a guide groove (52A) is formed on the bottom surface of the plate (50); and
the plate (50) can slide back and forth along the first guide rail (21A) as the first guide rail (21A) and the guide groove (52A) are coupled.

25. A grip device for a portable electronic device, comprising:
a base (20) attached to the portable electronic device;
a plate (50) coupled to the base (20) so as to be slidable back and forth a predetermined distance; and
a grip (10) having one or more finger holes (11A, 11B, 11C) and coupled to the plate (50) so as to be rotatable a predetermined angle about a predetermined axis, wherein:
a first guide groove (21B) is formed on the top surface (24) of the base (20);
a guide rail (52B) is formed on the bottom surface of the plate (50); and
the plate (50) can slide back and forth along the first guide groove (21B) as the first guide groove (21B) and the guide rail (52B) are coupled.

26. A grip device for a portable electronic device, comprising:
a base (20) attached to the portable electronic device;
a plate (50) coupled to the base (20) so as to be slidable back and forth a predetermined distance; and
a grip (10) having one or more finger holes (11A, 11B, 11C) and coupled to the plate (50) so as to be rotatable a predetermined angle about a predetermined axis, wherein:
a guide rod (28) is formed or installed on the base (20);
the plate (50) has a guide rod insertion hole (58);
the grip (10) has a guide rod insertion hole (18); and
the plate (50) and the grip (10) can together slide back and forth along the guide rod (28), and the grip (10) can also be rotated a predetermined angle about the guide rod (28), while the guide rod (28) is located within the guide rod insertion hole (58) of the plate (50) and the guide rod insertion hole (18) of the grip (10).

27. A grip device for a portable electronic device, comprising:
a base (20) attached to the portable electronic device;
a plate (50) coupled to the base (20) so as to be slidable back and forth a predetermined distance; and
a grip (10) having one or more finger holes (11A, 11B, 11C) and coupled to the plate (50), wherein:
the plate (50) has a shaft receiving groove (53) whose bottom is open;
the grip (10) can be rotated a predetermined angle about the shaft (15) of the grip (10) while the shaft (15) is accommodated in the shaft receiving groove (53); and
the shaft (15) can slide back and forth while being in contact with the top surface (24) of the base (20) while being accommodated in the shaft receiving groove (53).

28. A grip device for a portable electronic device, comprising:
a base (20) attached to the portable electronic device;
a plate (50) coupled to the base (20) so as to be slidable back and forth a predetermined distance; and
a grip (10) having one or more finger holes (11A, 11B, 11C) and coupled to the plate (50) so as to be rotatable a predetermined angle about a predetermined axis, wherein:
when the plate (50) and the grip (10) are moved forward, the grip (10) can be tilted to one of the left and right sides about the predetermined axis, but cannot be tilted to the opposite side; and
when the plate (50) and the grip (10) are moved backward, the grip (10) cannot be tilted to the left or right about the predetermined axis, and a state of being upright at a predetermined angle can be maintained.

29. The grip device for a portable electronic device according to claim 28, wherein:
when the plate (50) and the grip (10) are moved backward, the grip (10) is positioned between a side (56) of the plate (50) and a side wall (22) of the base (20), and the grip (10) is supported by the side (56) of the plate (50) and the side wall (22) of the base (20), thereby preventing the grip (10) from being tilted to the left or right about the predetermined axis, and maintaining the state of being upright at a predetermined angle.

30. The grip device for a portable electronic device according to claim 28, further comprising a cover (40) coupled to the base (20), wherein:
when the plate (50) and the grip (10) are moved forward, the grip (10) can be tilted to one of the left and right sides about the predetermined axis, but cannot be tilted to the opposite side because a side of the grip (10) comes into contact with a side (41) of the cover (40).

31. The grip device for a portable electronic device according to claim 30, wherein:
when the plate (50) and the grip (10) are moved backward, the grip (10) is positioned between a side (41) of the cover (40) and a side wall (22) of the base (20), and the grip (10) is supported by the side (41) of the cover (40) and the side wall (22) of the base (20), thereby preventing the grip (10) from being tilted to the left or right about the predetermined axis, and maintaining the state of being upright at a predetermined angle.

32. A grip device for a portable electronic device, comprising:
a base (20) attached to the portable electronic device;
a plate (50) coupled to the base (20) so as to be slidable back and forth a predetermined distance;
a grip (10) having one or more finger holes (11A, 11B, 11C) and coupled to the plate (50) so as to be rotatable a predetermined angle about a predetermined axis; and
a cover (40) coupled to the base (20), wherein:
slide grooves (42) are respectively formed on the inner sides of both sides of the cover (40), and the base (20) and the cover (40) can be coupled as both side parts (25A) of the base (20) are respectively inserted into the slide grooves (42);
coupling grooves (25B) are respectively formed on the lower parts of both sides of the base (20);
coupling protrusions (43) are respectively formed on both sides of the cover (40); and
the coupling grooves (25B) and the coupling protrusions (43) can be respectively coupled when the side parts (25A) are respectively inserted into the slide grooves (42).

33. A grip device for a portable electronic device, comprising:
a base (20) attached to the portable electronic device;
a plate (50) coupled to the base (20) so as to be slidable back and forth a predetermined distance; and
a grip (10) having a plurality of finger holes (11A, 11B, 11C) and coupled to the plate (50) so as to be rotatable a predetermined angle about a predetermined axis, wherein:
a finger rest (12) is formed behind the finger holes (11A, 11B, 11C);
the top (Z) of the finger rest (12) is open; and
a user's finger can be placed on the finger rest (12).

34. The grip device for a portable electronic device according to claim 33, wherein:
a support rod (13) is formed at the rear part of the finger rest (12); and
the user's finger placed on the finger rest (12) can escape toward the top (Z) of the finger rest (12).
